# EUROPÄISCHE PATENTSCHRIFT

(11) **EP 2 280 154 B1**
(45) Veröffentlichungstag und Bekanntmachung des Hinweises auf die Patenterteilung: **05.08.2015**
(21) Anmeldenummer: 10005786.8
(22) Anmeldetag: 04.06.2010
(51) Int. Cl.: F01N 3/20, F02B 37/013, F02B 37/18, F02D 9/06, F02B 37/00, F02D 41/00

(54) **Verfahren und Vorrichtung zur Reinigung eines Abgasstroms einer Brennkraftmaschine**
Method and device for cleaning an exhaust gas flow of a combustion engine
Procédé et dispositif de nettoyage des gaz d'échappement d'un moteur à combustion interne

(30) Priorität: 30.07.2009 DE 102009035693
(43) Veröffentlichungstag der Anmeldung: 02.02.2011
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- EP-A2- 2 037 091
- DE-A1- 4 310 926
- US-A1- 2008 098 733

## Beschreibung

Die Erfindung betrifft ein Verfahren zur Reinigung eines Abgasstroms einer Brennkraftmaschine, insbesondere einer abgasaufgeladenen Brennkraftmaschine, nach dem Oberbegriff des Anspruchs 1. Ferner betrifft die Erfindung eine Vorrichtung zur Reinigung eines Abgasstroms einer Brennkraftmaschine, insbesondere einer abgasaufgeladenen Brennkraftmaschine nach dem Oberbegriff des Anspruchs 11.

Bei der Abgasreinigung bereiten vor allem die Abgasemissionen im Kaltstart Probleme, da die gesetzlich vorgeschriebenen Abgasemissionsgrenzwerte auch nach einem Start eines kalten Motors und damit bei noch nicht betriebswarmem Katalysator eingehalten werden müssen. Von wesentlicher Bedeutung ist hierbei die sogenannte Anspringtemperatur der Katalysatoren. Als Anspringtemperatur wird die Temperatur bezeichnet, bei der ein Katalysator eine Konvertierungsrate von 50% erreicht. Eines der Ziele der Katalysatorauslegung ist es daher, möglichst niedrige Anspringtemperaturen zu erreichen. Um dies zu gewährleisten, werden die Katalysatoren des Nachbehandlungssystems üblicherweise sehr motornah angeordnet, um deren schnelles Aufheizen und damit ein möglichst schnelles Anspringen sicherzustellen:
Der Einsatz der selektiven katalytischen Reduktion, kurz SCR genannt, zur Reduzierung der Stickoxide im Abgasstrom von Brennkraftmaschinen, insbesondere bei mit Luftüberschuss betriebenen Brennkraftmaschinen, ist allgemein bekannt. Als Aktivkomponenten für die in Verbindung mit der selektiven katalytischen Reduktion zum Einsatz kommenden SCR-Katalysatoren eignen sich Vanadiumoxid und/oder Wolframoxid und/oder Titandioxid und/oder eisen- und/oder kupferhaltige Zeolithe und/oder Zirkonoxid. Die Umsetzung erfolgt im Wesentlichen gemäß nachstehender Gleichung:

   2NO + 0,5O₂ + 2NH3 → 2N₂ + 3H₂O (Gleichung 1)

Diese SCR-Reaktion wird durch die Anwesenheit von NO₂ beschleunigt, wodurch die Anspringtemperatur der Katalysatoren merklich abgesenkt wird:

NO + NO₂ + 2NH3 → 2N₂ + 3H₂O (Gleichung 2)

Das für diese Technologie benötigte NO₂ wird dabei an platinhaltigen Katalysatoren aus dem von der Brennkraftmaschine emittierten Stickstoffmonoxid gemäß der nachfolgenden Gleichung erzeugt:

2NO + O₂ ↔ 2NO₂ (Gleichung 3)

Je nach Ausführung der Katalysatoren, je nach Platingehalt und je nach Anwendungsfall weisen die Katalysatoren Anspringtemperaturen zwischen 180°C bis 330°C auf. Allerdings ist hier zu beachten, dass der NO₂-Anteil an den Gesamtstickoxiden mit steigender Temperatur wieder zurückgeht, da bei hohen Temperaturen das thermodynamische NO/NO₂-Gleichgewicht auf der Seite von NO liegt.

Als Reduktionsmittel für die SCR-Reaktion ist der Einsatz von Ammoniak allgemein bekannt, welcher allerdings aufgrund seiner Toxizität oft durch ungefährliche, ammoniakabspaltende Verbindungen, wie Harnstoff oder Ammoniumformiat ersetzt wird. Die Zersetzung erfolgt gemäß nachstehender Gleichung:

(NH₂)₂CO + H₂O → 2NH₃ + CO₂ (Gleichung 4)

Die Zersetzung dieser Stoffe und damit die Freisetzung von Ammoniak sind beim SCR-Verfahren ausschlaggebend für die Einsetzbarkeit des Verfahrens. Da beispielsweise die Zersetzung von Harnstoff nach obiger Gleichung 4 in der Gasphase erst bei 450°C quantitativ gelingt, werden oft sogenannte Hydrolysekatalysatoren eingesetzt, wie dies beispielsweise aus der EP 0 487 886 B1 und der EP 0 555 746 B1 bekannt ist, mittels denen die Zersetzungstemperaturen auf ca. 170°C abgesenkt werden können. Um die Katalysatoren zu verkleinern, aber die Verweilzeit in den Katalysatoren konstant zu belassen, werden diese Hydrolysekatalysatoren zum Beispiel in einem Abgasteilstrom betrieben, der dem Hauptstrom entnommen wird. Dies ist beispielsweise bei der EP 1 052 009 B1oder EP 2 037 091 A der Fall. Besonders vorteilhaft ist es dabei, den Abgasteilstrom möglichst motornah zu entnehmen, um den Hydrolysekatalysator auf einem hohen Temperaturniveau betreiben zu können. Bei abgasaufgeladenen Brennkraftmaschinen ist es vorteilhaft, den Abgasteilstrom bereits vor dem Turbolader zu entnehmen und ihn stromab des Turboladers wieder zurückzuführen (DE 102 060 28 A1), da die Abgastemperatur stromauf der Abgasturbine bei Volllast um bis zu 350°C über der Abgastemperatur stromab der Abgasturbine liegt.

Allerdings sind im Leerlauf- und/oder im Schwachlastbetrieb der Brennkraftmaschine, selbst bei Entnahme eines Abgasteilstroms vor einer Abgasturbine, die Abgastemperaturen oftmals nach wie vor zu niedrig, um eine sichere Zersetzung einer Reduktionsmittelvorläufersubstanz zu zum Beispiel Ammoniak als Reduktionsmittels zu gewährleisten. Verschärft wird das Problem durch die in diesen Betriebszuständen sehr geringen Abgasmengen, die bei ca. 10% der Maximalmenge liegen, was dazu führt, dass es durch die endotherme Zersetzung der Reduktionsmittelvorläufersubstanz zu einer merklichen Abkühlung des Abgasteilstroms kommt. Ist die Reduktionsmittelvorläufersubstanz in Wasser gelöst, wie zum Beispiel bei einer wässrigen Harnstofflösung, kommt zusätzlich die Abkühlung des Abgasteilstroms durch die Verdampfungsenthalpie des Wassers hinzu. Dies führt dazu, dass die Abgastemperatur im Abgasteilstrom unter die kritische Temperatur von ca. 170°C absinken kann, so dass eine Zugabe von Reduktionsmittel in diesen Betriebspunkten nicht möglich ist.

Aus der DE 10 2007 061 005 A1 ist bereits ein gattungsgemäßes Verfahren zur Hydrolyse eines Reduktionsmittels in einem Abgasnachbehandlungssystem bekannt, bei dem die Temperatur an einem Hydrolysekatalysator durch eine aktive Steuerung oder Regelung der über einen Abgasteilstrom geführten Abgasmenge in vorgegebenen Grenzen gehalten wird.

Demgegenüber ist es Aufgabe der vorliegenden Erfindung, ein alternatives Verfahren und eine alternative Vorrichtung zur Reinigung eines Abgasstroms einer Brennkraftmaschine, insbesondere einer abgasaufgeladenen Brennkraftmaschine, zu schaffen, mittels der im Leerlauf- und/oder Schwachlastbetrieb der Brennkraftmaschine eine besonders einfache und sichere Reduktionsmittelbereitstellung für eine selektive katalytische Reduktion bewerkstelligt werden kann.

Diese Aufgabe wird gelöst mit den Merkmalen der unabhängigen Ansprüche. Vorteilhafte Ausgestaltungen sind jeweils Gegenstand der Unteransprüche.

Gemäß Anspruch 1 wird ein Verfahren zur Reinigung eines Abgasstroms einer Brennkraftmaschine vorgeschlagen, bei dem Stickoxide aus dem Abgasstrom mittels der selektiven katalytischen Reduktion (SCR) entfernt werden, wobei der Abgasstrom stromauf wenigstens eines SCR-Katalysators in einen Haupt-Abgasstrom und einen Abgasteilstrom aufgeteilt ist bzw. aufgezweigt wird. Dem Abgasteilstrom wird in definierten Brennkraftmaschinen-Betriebszuständen eine definierte Menge einer zu zersetzenden Reduktionsmittelvorläufersubstanz zugeführt, die in einem Reaktor des Abgasteilstroms zu einem Reduktionsmittel, bevorzugt zu Ammoniak, umgesetzt wird, der mittels des Abgasteilstroms vom Reaktor abgeführt und stromauf des SCR-Katalysators dem Haupt-Abgasstrom zugeführt wird, wobei im Abgasteilstrom wenigstens eine mittels einer Steuer- und/oder Regelvorrichtung gekoppelte und in Abhängigkeit von definierten Betriebsparametern ansteuerbare Absperr- und/oder Drosseleinrichtung vorgesehen ist. Erfindungsgemäß ist auch im Haupt-Abgasstrom wenigstens eine mittels einer Steuer- und/oder Regelvorrichtung gekoppelte Absperr- und/oder Drosseleinrichtung angeordnet. Die im Abgasteilstrom und im Haupt-Abgasstrom angeordneten Absperr- und/oder Drosseleinrichtungen werden, insbesondere im definierten Leerlauf- und/oder Schwachlastbetrieb der Brennkraftmaschine, dergestalt in Abhängigkeit von definierten Reaktor-Reaktionsparametern (zum Beispiel Sollabgasmenge bzw. -masse und/oder Sollabgasdruck und/oder Soll-Luft-Kraftstoff-Verhältnis und/oder Sollabgastemperatur) angesteuert, dass zum einen der Haupt-Abgasstrom mittels der in diesem angeordneten Absperr- und/oder Drosseleinrichtung abgesperrt oder definiert gedrosselt wird und zum anderen der Abgasstrom mittels der in diesem angeordneten Absperr- und/oder Drosseleinrichtung in definiertem Maße aufgestaut wird.

Die Ansteuerdauer und die Höhe der Ansteuerung der zum Beispiel Klappen als Absperr- und/oder Drosseleinrichtungen hängt somit bevorzugt von den definierten Reaktionsparametern ab. Um allerdings zu vermeiden, dass der Motor sehr lange in diesem Betriebsmodus arbeitet, kann zum Beispiel zusätzlich eine Abbruchzeit als Zeitschwelle definiert werden, so dass zum Beispiel beim Überschreiten dieser Zeitschwelle die Klappen wieder geöffnet werden.

Als Reduktionsmittelvorläufersubstanzen werden insbesondere Ammoniakvorläufersubstanzen verwendet und hier insbesondere Harnstoff und/oder eine Harnstoffwasser-Lösung und/oder Ammoniumformiat und/oder Guanidin und/oder Guanidinsalze, insbesondere Guanidinformiat und/oder Ammoniumcarbamat oder dergleichen.

Mit der erfindungsgemäßen Lösung wird zum Beispiel für den Fall, dass zum Beispiel im Leerlauf- und/oder im Schwachlastbetrieb der Brennkraftmaschine die Abgasmenge und/oder die Temperatur unter einen definierten Schwellwert absinkt, bei dem keine oder nur mehr eine ungenügende Ammoniakfreisetzung im Reaktor möglich ist, die wenigstens eine im Haupt-Abgasstrom angeordnete Absperr- und/oder Drosseleinrichtung abgesperrt oder definiert gedrosselt, während gleichzeitig im Abgasteilstrom eine bevorzugt variable Abgas- und/oder Drosseleinrichtung eine Abgas-Aufstauung bewirkt. Über die Steuer- und/oder Regelvorrichtung kann dabei zum Beispiel in Verbindung mit Sensoren oder alternativ über Kennfelder, die geeignete Zeitdauer und/oder Intensität der jeweils gerade erforderlichen Maßnahmen vorgegeben werden. Mit der zuvor beschriebenen erfindungsgemäßen Verfahrensführung wird zum einen eine gewünschte Abgasmenge als Abgasteilstrom abgezweigt und zum anderen die Abgastemperatur angehoben. Letzteres beruht auf der Tatsache, dass der Luftdurchsatz durch den Motor und mit diesem das Luft-Kraftstoff-Verhältnis sinkt. Zudem steigt die Ausschiebearbeit der Brennkraftmaschine auf Grund des höheren Abgasgegendrucks an. Beides führt zu einem deutlichen Abgastemperaturanstieg. Aufgrund der dann höheren Abgastemperaturen und -mengen, die über den Reaktor geleitet werden, steht in diesem mehr Energie zur Zersetzung des Reduktionsmittels zur Verfügung, so dass eine zum Beispiel Ammoniak-Freisetzung insbesondere auch im Leerlauf- und/oder im Schwach-lastbetrieb der Brennkraftmaschine sehr gut möglich wird.

In Verbindung mit der zuvor beschriebenen erfindungsgemäßen Verfahrensführung ist es gemäß einer konkreten Verfahrensführung besonders vorteilhaft, dass der Haupt-Abgasstrom abgesperrt bzw. definiert gedrosselt wird, um eine gewünschte Abgasmasse bzw. -menge als Abgasteilstrom über den Reaktor zu leiten, während mittels der im Abgasteilstrom angeordneten wenigstens einen Absperr- und/oder Drosseleinrichtung der Sollabgasdruck und/oder das Soll-Kraftstoff-Verhältnis und/oder die Sollabgastemperatur in Abhängigkeit von definierten Reaktionsparametern im Reaktor vorgegeben, insbesondere eingeregelt wird.

Grundsätzlich können die Absperr- und/oder Drosseleinrichtungen durch feste Blenden gebildet werden, die keine variablen Durchflusswerte aufweisen. Die Absperr- und/oder Drosseleinrichtungen, insbesondere die im Abgasteilstrom angeordnete Absperr- und/oder Drosseleinrichtung sind jedoch bevorzugt als variabel einstellbare Absperr- und/oder Drosseleinrichtung ausgebildet. Mit Hilfe einer derartigen variablen Absperr- und/oder Drosseleinrichtung lässt sich die Menge des wenigstens einen abgezweigten Abgasteilstroms und/oder der Abgasgegendruck und/oder das Luft-Kraftstoff-Verhältnis und/oder die Abgastemperatur besonders vorteilhaft einstellen bzw. durch die Verwendung von geeigneten Sensoren einregeln.

Mit der erfindungsgemäßen Verfahrensführung können die jeweiligen Abgasströme somit auf einfache Weise einzeln oder gemeinsam so umgelenkt und/oder aufgestaut werden, dass für die Ammoniakfreisetzung auch im Leerlauf- und/oder Schwachlastbetrieb der Brennkraftmaschine eine funktionssichere Zersetzung der zum Beispiel Ammoniakvorläufersubstanzen erfolgt. Das heißt, dass mit der erfindungsgemäßen Verfahrensführung die einzelnen Abgasströme sowohl einzeln als auch gemeinsam so umgelenkt und/oder aufgestaut werden können, dass die für die Ammoniakfreisetzung im Schwachlast- und/oder Leerlaufbetrieb der Brennkraftmaschine erforderlichen hohen Temperaturen und/oder Abgasmengen zur Verfügung gestellt werden können und im Reaktor stets eine zuverlässige Zersetzung der Reduktionsmittelvorläufersubstanzen und damit eine Bereitstellung des Reduktionsmittels erfolgen kann.

Gemäß einer besonders bevorzugten Verfahrensführung wird der Reduktionsmittel-Zuführstrom als Abgasteilstrom vom Abgasstrom abgezweigt, insbesondere stromauf wenigstens einer Absperr- und/oder Drosseleinrichtung des Abgasstroms an einer Entnahmestelle, so dass sich der Abgasstrom in einen lediglich zur besseren Unterscheidung der Abgasströme sogenannten Haupt-Abgasstrom und den Abgasteilstrom aufteilt.

Bevorzugt ist die wenigstens eine Absperr- und/oder Drosseleinrichtung im Abgasteilstrom stromauf des Reaktors angeordnet. Grundsätzlich könnte sie aber auch stromab des Reaktors, jedoch stromauf der Zuführung des Abgasteilstroms zum Haupt-Abgasstrom vorgesehen werden.

Bevorzugt wird bei der erfindungsgemäßen Verfahrensführung das Luft-Kraftstoff-Verhältnis um mindestens 0,2, allerdings nicht unter 1,02 abgesenkt und/oder die Abgastemperatur um mindestens 30°C und/oder der Abgasgegendruck nach Austritt aus dem Zylinder um 0,01 MPa bis 0,5MPa und/oder der relative Abgasgegendruck beim Austritt aus den Zylindern um 30% bis 5000% angehoben und/oder die Abgasmenge um mindestens 30% verringert. Dabei werden weiter bevorzugt im ungedrosselten Betrieb der Brennkraftmaschine höchstens 30% der Abgasmasse als Abgasteilstrom dem Reaktor zugeführt, während es im gedrosselten Betrieb mindestens 30% sind.

Als Absperr- und/oder Drosseleinrichtung kommen zum Beispiel Klappen, Ventile oder Schieber in Frage, die zum Beispiel elektrisch, pneumatisch oder hydraulisch angesteuert werden können.

Zur Verbesserung der Ammoniakfreisetzung bzw. der Reduktionsmittelzersetzung ist es möglich, den Reaktor zusätzlich zu beheizen, insbesondere elektrisch zu beheizen, und/oder ihn katalytisch zu beschichten. Als katalytisch aktive Substanzen zur Verbesserung der Reduktionsmittelzersetzung, insbesondere beim Einsatz von Harnstoff, kommen unter anderem Titanoxid und/oder Aluminiumoxid und/oder Wolframoxid und/oder Zirkonoxid und/oder kupferhaltige Zeolithe und/oder eisenhaltige Zeolithe in Frage. Zur Vergrößerung der aktiven Oberfläche bietet es sich an, den Katalysator auf metallisches oder keramisches Katalysatorsubstrat aufzubringen. Diese bilden üblicherweise parallele Strömungskanäle aus. Auch solche Substrate, zum Beispiel Sintermetallschäume, können zum Einsatz gelangen, die eine Vermischung des Reduktionsmittels über den Querschnitt ermöglichen.

Um den NOₓ-Umsatz zu verbessern, ist es grundsätzlich möglich, zusätzlich zu dem, stromab der Rückführung des Abgasteilstroms in den Hauptabgasstrom, angeordneten SCR-Katalysator einen zweiten SCR-Katalysator im Reduktionsmittel-Zuführstrom bzw. im Abgasteilstrom, und zwar stromab der Zuführungsstelle für das Reduktionsmittel anzubringen. Dieser zusätzliche SCR-Katalysator kann alternativ oder zusätzlich auch im Reaktor selbst angebracht sein. Enthält der Reaktor einen Katalysator zur Verbesserung der Harnstoffzersetzung, wird der SCR-Katalysator bevorzugt stromab dieser Katalysatoren angeordnet. Es ist auch möglich, die Katalysatoren zur Zersetzung des Reduktionsmittels mit einer NOₓ-Reduktionsaktivität zu versehen, so dass bereits über diese Katalysatoren ein NOₓ-Umsatz realisiert werden kann. Als Aktivkomponenten für die im Reduktionsmittel-Zuführstrom bzw. im Abgasteilstrom angebrachten Katalysatoren mit SCR-Aktivität kommen Vanadiumoxid und/oder Zirkonoxid und/oder Wolframoxid und/oder eisenhaltige Zeolithe und/oder kupferhaltige Zeolithe in Frage.

Die Brennkraftmaschine ist bevorzugt als abgasaufgeladene Brennkraftmaschine mit wenigstens einer im Abgasstrom angeordneten Abgasturbine ausgebildet. Im Falle einer einzigen Abgasturbine wird der Abgasteilstrom stromauf und/oder stromab, bevorzugt jedoch stromauf, der Abgasturbine abgezweigt. Im Falle mehrerer, seriell angeordneter Abgasturbinen kann die Abzweigung des Abgasteilstroms ebenfalls wiederum stromauf und/oder stromab einer der Abgasturbinen erfolgen, bevorzugt jedoch stromauf einer in Strömungsrichtung gesehen ersten Abgasturbine und/oder zwischen zwei benachbarten Abgasturbinen. Ist die wenigstens eine Abgasturbine mit einem Waste-Gate ausgestattet, das dem Schutz der Abgasturbine vor zu hohen Umdrehungszahlen dient, kann die Abzweigung des Abgasteilstroms grundsätzlich auch innerhalb des Waste-Gates erfolgen. Bei einer mehrstufigen Aufladung können mehrere Turbinen mit einem Waste-Gate ausgestattet werden, die Entnahme kann dabei an einem oder an mehreren der Waste-Gates erfolgen.

Des Weiteren kann der erfindungsgemäße Aufbau mit Vorrichtungen zur Erhöhung der Bremsleistung des Motors im Bremsbetrieb, insbesondere mit Motorstau- oder Motorbremsklappen, die im Abgastrakt angebracht sind, kombiniert werden. Die Entnahme für den zum Reaktor geleiteten Abgasteilstrom kann stromauf der Motorstau- oder Motorbremsklappe, die Rückführung stromab der Klappe erfolgen. Je nach Entnahme oder Rückführposition können somit die erfindungsgemäßen Drossel- und/oder Absperreinrichtungen im Abgasstrom bzw. Haupt-Abgasstrom eingespart oder der Abgasgegendruck und damit die Bremsleistung über die im Abgasteilstrom angebrachten Absperr- und/oder Drosseleinrichtungen gesteuert oder geregelt werden.

Gemäß einer weiteren bevorzugten Ausgestaltung ist vorgesehen, dass eine Abgassteuereinrichtung, zum Beispiel eine Abgasstauklappe oder dergleichen, stromauf einer Abgasturbine bzw. einer ersten Abgasturbine einer Turboladeranordnung angebracht ist. Zusätzlich kann hier ein parallel zu dieser Abgassteuereinrichtung angeordneter Schusskanal vorgesehen sein, über den Abgas unter hohem Druck und mit hoher Geschwindigkeit auf das Laufrad der Turbine geleitet und damit diese angetrieben wird. Über den mit der Turbine verbundenen Verdichter wird dem Motor mehr Frischluft zugeführt, wodurch die Zylinderfüllung und damit die Abgasmenge angehoben werden. Die Entnahme für den zum Reaktor geleiteten Abgasteilstrom erfolgt bevorzugt stromauf dieser Abgassteuereinrichtung.

Bezüglich der erfindungsgemäßen Vorrichtung ergeben sich die gleichen Vorteile, wie sie bereits zuvor in Verbindung mit der Ausgestaltung der Verfahrensführung näher erläutert worden sind. Insofern wird bezüglich dieser Vorteile auf die zuvor gemachten Ausführungen verwiesen.

Die Erfindung wird nachfolgend anhand einer Zeichnung erläutert.
- Fig. 1: eine schematische Darstellung einer ersten erfindungsgemäßen Verfahrensführung und Vorrichtung zum Reinigen eines Abgasstroms einer einstufig aufgeladenen Brennkraftmaschine,
- Fig. 2: schematisch eine Verfahrensführung und eine Vorrichtung mit einer zweistufigen Aufladung der Brennkraftmaschine,
- Fig. 3: eine schematische Darstellung einer Verfahrensführung und Vorrichtung zur Reinigung eines Abgasstroms einer zweistufig aufgeladenen Brennkraftmaschine mit einer Abgasstromentnahme innerhalb eines Waste-Gates, und
- Fig. 4: schematisch eine Verfahrensführung und eine Vorrichtung zur Reinigung eines Abgasstroms einer einstufig aufgeladenen Brennkraftmaschine mit einer Entnahme des Abgasteilstroms stromauf einer stromauf einer Abgasturbine angebrachten Abgasbremsklappe mit parallel angeordnetem Schusskanal.

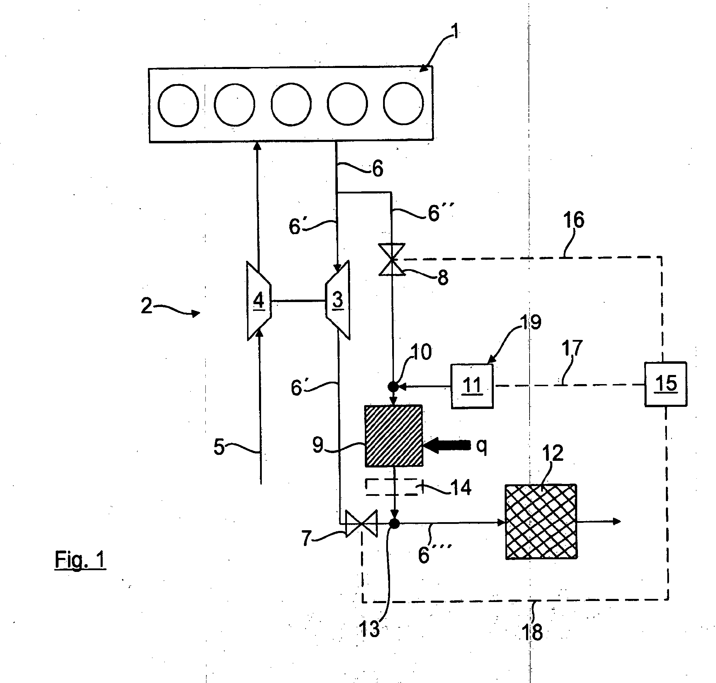

In der Fig. 1 ist schematisch eine erste Ausführungsform einer erfindungsgemäßen Verfahrensführung und einer erfindungsgemäßen Vorrichtung zur Reinigung eines Abgasstroms einer mittels eines Abgasturboladers 2 einstufig aufgeladenen Brennkraftmaschine 1 gezeigt. Der Abgasturbolader 2 weist eine Abgasturbine 3 und einen Verdichter 4 auf. Mittels des Verdichters 4 erfolgt eine Aufladung der Ladeluft 5, wobei der Verdichter 4 mittels der Abgasturbine 3 angetrieben wird.

Stromauf der Abgasturbine 3 zweigt sich ein von der Brennkraftmaschine 1 kommender Abgasstrom 6 in einen Haupt-Abgasstrom 6' und einen Abgasteilstrom 6" auf. Stromab der Abgasturbine 3 ist eine zum Beispiel durch eine Motorstau- oder Motorbremsklappe gebildete variable Drosseleinrichtung 7 im Abgasstrom 6' vorgesehen. Im Abgasteilstrom 6" ist in Strömungsrichtung gesehen eine weitere variable Drosseleinrichtung 8 angeordnet. Stromab dieser variablen Drosseleinrichtung 8 ist im Abgasteilstrom 6" ein Reaktor 9 angeordnet. Stromauf des Reaktors 9 ist eine Zumessstelle 10 für eine Ammoniakvorläufersubstanz als zu zersetzendes Reduktionsmittel 11 vorgesehen. Stromab des Reaktors mündet der Abgasteilstrom 6" stromab der variablen Drosseleinrichtung 7 wieder in den Haupt-Abgasstrom 6' ein, so dass diese beiden Abgasströme dann zusammen als ammoniakhaltiger Abgasstrom 6"', wie dies nachfolgend noch näher beschrieben wird, einem SCR-Katalysator 12 zugeführt wird.

Wie dies in der Fig. 1 schematisch durch den fett eingezeichneten Pfeil mit dem Bezugszeichen q dargestellt ist, kann dem Reaktor 9 gegebenenfalls Wärmeenergie von außen zugeführt werden, zum Beispiel mittels einer elektrischen Heizeinrichtung. Wie dies in der schematischen Darstellung der Fig. 1 weiter strichliert eingezeichnet ist, kann zum Beispiel stromab des Reaktors 9 und stromauf einer Einmündstelle 13 des Abgasteilstroms 6" in den Abgasstrom 6' ein weiterer SCR-Katalysator 14 angeordnet sein.

Ferner ist in der Fig. 1 noch eine Steuer- und/oder Regeleinrichtung 15 dargestellt, die über hier strichliert dargestellte Signalleitungen 16, 17 und 18 signaltechnisch mit den beiden Drosseleinrichtungen 7, 8 bzw. mit einer das Reduktionsmittel 11 aufweisenden Zumesseinrichtung 19 gekoppelt ist.

Die grundsätzliche Funktionsweise dieser Erfindungsvariante ist dergestalt, dass bei definierten Betriebszuständen durch entsprechende Ansteuerung der variablen Drosseleinrichtung 7 und/oder der variablen Drosseleinrichtung 8 eine definierte Abgasmenge als Abgasteilstrom 6" vom Abgasstrom 6 abgezweigt und dem Reaktor 9 zugeführt werden kann. Dieser Abgasteilstrom 6" wird stromauf des Reaktors 9, mittels der Steuer- und/oder der Regeleinrichtung 15, entsprechend definierter Betriebsparameter der Brennkraftmaschine und/oder definierter Reaktionsparameter des Reaktors 9 mit einer definierten Menge eines zu zersetzenden Reduktionsmittels 11 beaufschlagt, das im Reaktor 9 zusammen mit dem heißen Abgas des heißen Abgasteilstroms 6" Ammoniak erzeugt, das dann mittels des Abgasteilstroms 6" an der Einmündstelle 13 dem Abgasstrom 6'zugeführt wird, so dass dieser als ammoniakhaltiger Abgasstrom 6'" zum SCR-Katalysator 12 strömt.

Wird nunmehr in definierten Schwachlast- und/oder Leerlauf-Betriebszuständen der Brennkraftmaschine 1 eine Unterschreitung eines definierten Temperaturschwellwertes und/oder eines definierten Abgasmengen-Schwellwertes im Abgasteilstrom 6" festgestellt, so dass die Reduktionsmittelzersetzung im Reaktor 9 nur noch in einem ungenügenden Maße oder gegebenenfalls auch überhaupt nicht mehr stattfindet, so wird mittels der Steuer- und/oder Regeleinrichtung 15 die variable Drosseleinrichtung 7 angesteuert und diese abgesperrt bzw. in einem definierten Maße gedrosselt, und zwar dergestalt, dass die als Abgasteilstrom 6" abgezweigte Abgasmenge bzw. -masse erhöht wird. Zudem wird mittels der Steuer- und/oder Regeleinrichtung 15 auch die variable Drosseleinrichtung 8 so angesteuert, dass diese die als Abgasteilstrom 6" abgezweigte Abgasmenge aufstaut, so dass es zu einem deutlichen Temperaturanstieg des als Abgasteilstrom 6" zum Reaktor 9 geführten Abgases, in Folge eines abgesenkten Luft-Kraftstoff-Verhältnisses und/oder erhöhter Ausschiebearbeit der Brennkraftmaschine, kommt. Aufgrund der höheren Abgastemperaturen und/oder der höheren Abgasmenge, die über den Reaktor 9 geleitet wird, steht in diesem mehr Energie zur Zersetzung des Reduktionsmittels 11 zur Verfügung, so dass eine funktionssichere Ammoniak-Freisetzung auch im Leerlauf- und/oder Schwachlastbetrieb der Brennkraftmaschine 1 zuverlässig durchgeführt werden kann.

Die eben beschriebene Verfahrensführung ist nur eine Möglichkeit der Verfahrensführung, zeigt aber deutlich den Vorteil der erfindungsgemäßen Lösung, mittels der durch Aufstauung und/oder Umlenkung eines Abgasstroms auf einfache Weise sichergestellt werden kann, dass für die Ammoniakfreisetzung insbesondere im Leerlauf- und/oder Schwachlastbetrieb der Brennkraftmaschine hohe Temperaturen zur Verfügung gestellt werden können und zum anderen die Abgasmenge und damit die Wärmemenge, die dem Reaktor 9 zur Zersetzung des Reduktionsmittels zugeführt wird, deutlich angehoben werden kann.

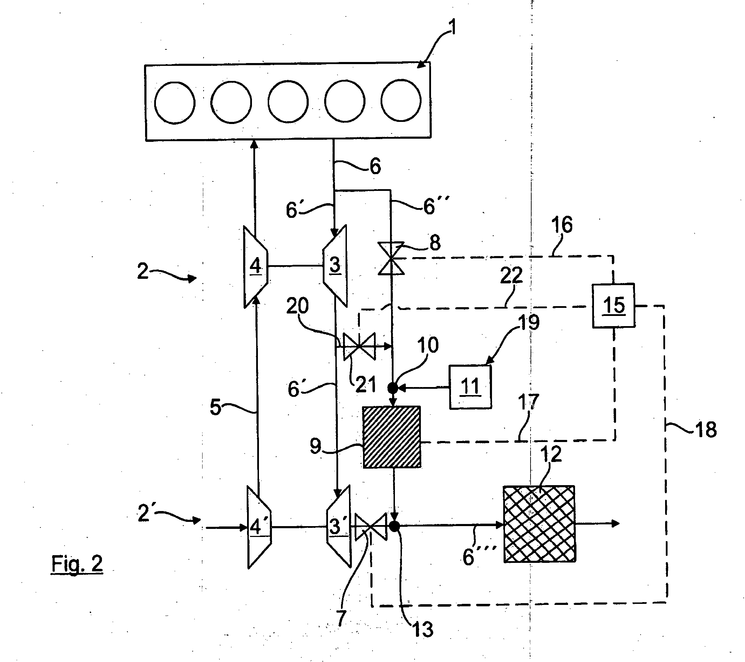

In der Fig. 2 ist eine alternative Ausführungsform gezeigt, bei der im Unterschied zur Ausführungsform nach Fig. 1 eine zweistufige Aufladung mittels eines zusätzlichen Abgasturboladers 2' erfolgt, der eine Abgasturbine 3' und einen Verdichter 4' aufweist. Bevorzugt ist hier die in Strömungsrichtung gesehen vordere, erste Abgasturbine 3 als Hochdruckturbine ausgelegt, während die stromab gelegene zweite Abgasturbine 3' als Niederdruckturbine ausgelegt ist.

In weiterer Unterscheidung zur Ausführungsform gemäß Fig. 1 ist hier ferner im Bereich zwischen der Abgasturbine 3 und der Abgasturbine 3' eine weitere Abzweigmöglichkeit eines Abgasteilstroms 20 vorgesehen, wobei in dem Abgasteilstrom 20 eine weitere variable Drosseleinrichtung 21 angeordnet ist, die über eine Signalleitung 22 mit der Steuer- und/oder Regeleinrichtung 15 verbunden ist. Mit einem derartigen Aufbau werden die Variationsmöglichkeiten wesentlich erhöht, da der dem Reaktor 9 zugeführte Abgasteilstrom, je nach den gerade vorherrschenden Betriebs- und/oder Reaktionsparametern, stromauf und/oder stromab der Abgasturbine 3 abgezogen werden kann.

Ansonsten entspricht der Aufbau und die Verfahrensführung dem- bzw. derjenigen der Ausführungsform gemäß Fig. 1, so dass insofern auf die zuvor in Verbindung mit der Fig. 1 Ausführungen verwiesen wird.

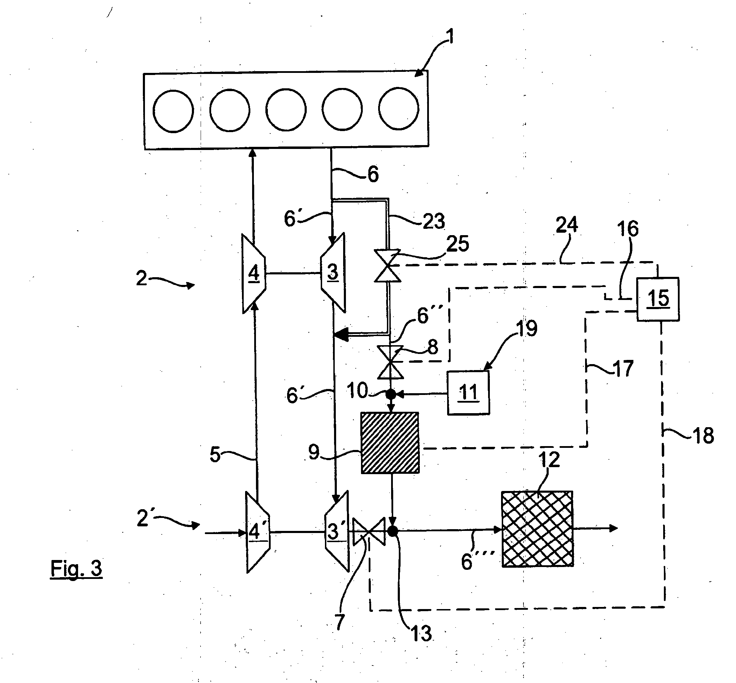

In der Fig. 3 ist eine weitere alternative Ausführungsform gezeigt, bei der ebenfalls wiederum eine zweistufige Aufladung der Brennkraftmaschine im Sinne der Fig. 2 erfolgt. Im Unterschied zur Ausgestaltung gemäß Fig. 2 erfolgt hier die Abzweigung des Abgasteilstroms 6" aus einer Waste-Gate-Leitung 23, in der eine variable Drosseleinrichtung 25 angeordnet ist, die mit einer Signalleitung 24 mit der Steuer- und/oder Regeleinrichtung 15 signaltechnisch gekoppelt wird.

Bei einer Ansteuerung der variablen Drosseleinrichtung 25 mittels der Steuer- und/oder Regeleinrichtung 15 kann über die Waste-Gate-Leitung 23 ein Bypass zur Abgasturbine 3 geöffnet werden. In diesem Fall kann dann von der Steuer- und/oder Regeleinrichtung 15 auch die variable Drosseleinrichtung 8 so angesteuert werden, dass ein Abgasteilstrom 6" dem Reaktor 9 zugeführt wird, wo dann in der zuvor beschriebenen Art und Weise eine Ammoniakerzeugung stattfindet. Ansonsten entspricht die Funktionsweise derjenigen, wie sie zuvor in Verbindung mit den Ausführungsformen 1 und 2 bereits näher erläutert worden sind.

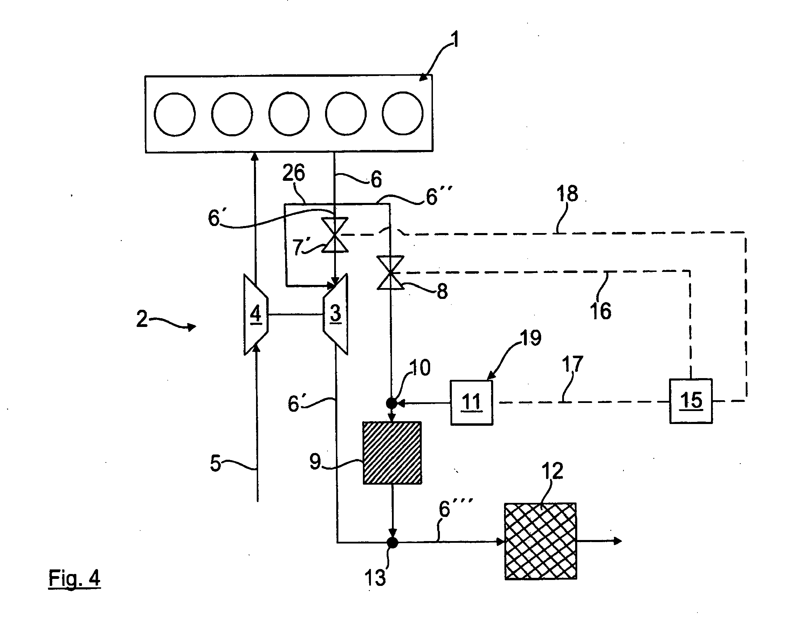

In der Fig. 4 ist schließlich eine Ausgestaltung gezeigt, bei der die Brennkraftmaschine 1 im Sinne der Ausgestaltung nach der Fig. 1 einstufig mittels des Abgasturboladers 2 aufgeladen wird. Im Unterschied zur Ausführungsform nach Fig. 1 ist hier die zum Beispiel durch eine Motor- bzw. Abgasbremsklappe gebildete variable Drosseleinrichtung 7' stromauf der Abgasturbine 3 angeordnet und erfolgt eine Abzweigung des Abgasteilstroms 6" stromauf dieser variablen Drosseleinrichtung 7'.

Im weiteren Unterschied zur Ausgestaltung nach Fig. 1 ist hier ferner noch ein stromauf der variablen Drosseleinrichtung 7' abgezweigter Schusskanal vorgesehen, mittels dem, insbesondere bei geschlossener Drosseleinrichtung 7', ein Abgasstrom 26 unter hohem Druck und mit hoher Geschwindigkeit auf das Laufrad der Abgasturbine 3 geleitet und diese damit angetrieben werden kann. Dadurch wird der Brennkraftmaschine 1 über den mit der Abgasturbine 3 verbundenen Verdichter 4 mehr Ladeluft 5 zugeführt als dies bei vergleichbaren Betriebszuständen gemäß der Ausführungsform nach Fig. 1 der Fall ist, wodurch die Zylinderfüllung der Brennkraftmaschine 1 und damit deren Abgasmenge und im Motorbremsbetrieb deren Bremsleistung angehoben wird.

Die Erfindung wurde zuvor hauptsächlich anhand definierter Leerlauf- und/oder Schwachlastbetriebszustände der Brennkraftmaschine beschrieben, bei denen die Bereitstellung von gewünschten bzw. notwendigen Reaktionsbedingungen im Reaktor gefährdet ist, zum Beispiel aufgrund der Unterschreitung definierter Temperatur- und/oder Abgasmengen-Schwellwerte. Es versteht sich von selbst, dass auch sämtliche anderen Brennkraftmaschinen-Betriebszustände, bei denen die Bereitstellung von gewünschten bzw. notwendigen Reaktionsbedingungen im Reaktor gefährdet ist, ausdrücklich vom Schutzumfang umfasst sind.

## Patentansprüche

1. Verfahren zur Reinigung eines Abgasstroms einer Brennkraftmaschine, insbesondere einer abgasaufgeladenen Brennkraftmaschine, bei dem Stickoxide aus dem Abgasstrom mittels der selektiven katalytischen, Reduktion (SCR) entfernt werden, wobei der Abgasstrom (6) stromauf wenigstens eines SCR-Katalysators (12) in einen Haupt-Abgasstrom (6') und einen Abgasteilstrom (6", 20) aufgeteilt ist oder aufgezweigt wird, diesem Abgasteilstrom (6", 20) in definierten Brennkraftmaschinen-Betriebszuständen eine definierte Menge einer zu zersetzenden Reduktionsmittelvorläufersubstanz (11) zugeführt wird, die in einem Reaktor (9) des Abgasteilstroms (6", 20) zu einem Reduktionsmittel umgesetzt wird, das mittels des Abgasteilstroms (6", 20) vom Reaktor (9) abgeführt und stromauf des SCR-Katalysators (12) dem Haupt-Abgasstrom (6') zugeführt wird,
wobei im Abgasteilstrom (6", 20) wenigstens eine mittels einer Steuer- und/oder Regelvorrichtung gekoppelte und in Abhängigkeit von definierten Betriebsparametern ansteuerbare Absperr- und/oder Drosseleinrichtung (8, 21) vorgesehen ist, und
wobei auch im Haupt-Abgasstrom (6', 20) wenigstens eine mittels einer Steuer- und/oder Regelvorrichtung gekoppelte Absperr- und/oder Drosseleinrichtung (7, 7') angeordnet ist,
**dadurch gekennzeichnet,**
**dass** die im Abgasteilstrom (6", 20) und im Haupt-Abgasstrom (6', 20) angeordneten Absperr- und/oder Drosseleinrichtungen (7, 7', 8, 21) dergestalt in Abhängigkeit von definierten Reaktionsparametern angesteuert werden, dass zum einen der Haupt-Abgasstrom (6') mittels der in diesem angeordneten Absperr- und/oder Drosseleinrichtung (7, 7') abgesperrt oder definiert gedrosselt wird und zum anderen der Abgasteilstrom (6", 20) mittels der in diesem angeordneten Absperr- und/oder Drosseleinrichtung (8, 21) in definiertem Maße aufgestaut wird.

2. Verfahren nach Anspruch 1, **dadurch gekennzeichnet, dass** insbesondere im Leerlauf- und/oder im Schwachlastbetrieb der Brennkraftmaschine (1) die wenigstens eine im Haupt-Abgasstrom (6') angeordnete. Absperr- und/oder Drosseleinrichtung (7, 7') zur Festlegung der über den Reaktor (9) geführten Abgasmasse bzw. -menge abgesperrt oder definiert gedrosselt wird, während der Sollabgasdruck und/oder das Soll-Luft-Kraftstoff-Verhältnis und/oder die Sollabgastemperatur mittels der wenigstens einen im Abgasteilstrom (6", 20) angeordneten Absperr- und/oder Drosseleinrichtung wenigstens in Abhängigkeit von definierten Reaktionsparametern im Reaktor (9) vorgegeben, insbesondere eingeregelt wird.

3. Verfahren nach Anspruch 1 oder Anspruch 2, **dadurch gekennzeichnet, dass** im Leerlauf- und/oder Schwachlastbetrieb der Brennkraftmaschine (1) der Haupt-Abgasstrom (6') soweit gedrosselt wird, dass das Luft-Kraftstoffverhältnis um mindestens 0,2, allerdings nicht unter 1,02, abgesenkt wird und/oder der Haupt-Abgasstrom (6') soweit gedrosselt wird, dass die Abgastemperatur um mindestens 30°C angehoben wird und/oder der Abgasstrom bzw. Haupt-Abgasstrom (6') soweit gedrosselt wird, dass der Abgasgegendruck beim Austritt aus den Zylindern um 0,01MPa bis 0,5MPa angehoben und/oder dass der relative Abgasgegendruck beim Austritt aus den Zylindern um 30% bis 5000% angehoben wird.

4. Verfahren nach einem der vorhergehenden Ansprüche, **dadurch gekennzeichnet, dass** im ungedrosselten Betrieb der Brennkraftmaschine (1) maximal 30% der Abgasmasse und im definiert gedrosselten Betrieb der Brennkraftmaschine (1) wenigstens 30% der Abgasmasse der Brennkraftmaschine (1) über den Abgasteilstrom (6', 20) geführt werden.

5. Verfahren nach einem der vorhergehenden Ansprüche, **dadurch gekennzeichnet, dass** der Reaktor (9) einen Katalysator oder eine Katalysatorbeschichtung aufweist, die die Zersetzung der Reduktionsmittelvorläufersubstanz (11), insbesondere einer Ammoniakvorläufersubstanz, begünstigt, wobei bevorzugt vorgesehen ist, dass der Katalysator oder die Katalysatorbeschichtung, die die Zersetzung der Reduktionsmittelvorläufersubstanz (11), insbesondere einer Ammoniakvorläufersubstanz, begünstigt, zugleich eine NOₓ-Reduktionsaktivität aufweist.

6. Verfahren nach einem der vorhergehenden Ansprüche, **dadurch gekennzeichnet, dass** im Abgasteilstrom (6", 20) stromab der Zuführung der Reduktionsmittelvorläufersubstanz (11) oder insbesondere im Falle eines Katalysators oder einer Katalysatorbeschichtung gemäß Anspruch 5 stromab des Reaktors (9) und stromauf der Zuführung des Abgasteilstroms (6", 20) zum Haupt-Abgasstrom (6') ein SCR-Katalysator (12) angeordnet ist.

7. Verfahren nach einem der vorhergehenden Ansprüche, **dadurch gekennzeichnet, dass** dem Reaktor (9) mittels einer Heizeinrichtung, insbesondere mittels einer elektrischen Heizeinrichtung, zu definierten Zeiten Wärme zugeführt wird.

8. Verfahren nach einem der vorhergehenden Ansprüche, **dadurch gekennzeichnet, dass** die Brennkraftmaschine (1) als abgasaufgeladene Brennkraftmaschine (1) mit wenigstens einer im Abgasstrom angeordneten Abgasturbine (3, 3') ausgebildet ist, wobei bevorzugt vorgesehen ist, dass der Abgasteilstrom (6") im Falle einer einzigen Abgasturbine (3) stromauf und/oder stromab, bevorzugt stromauf, der Abgasturbine (3) und im Falle mehrerer Abgasturbinen (3, 3') stromauf und/oder stromab einer der Abgasturbinen (3, 3'), bevorzugt stromauf einer in Strömungsrichtung gesehen ersten Abgasturbine (3) und/oder zwischen zwei benachbarten Abgasturbinen (3, 3') abgezweigt wird, und/oder dass der Abgasteilstrom (6") von einer Waste-Gate-Anordnung (23) wenigstens einer Abgasturbine (3) abgezweigt wird.

9. Verfahren nach einem der vorhergehenden Ansprüche, **dadurch gekennzeichnet, dass** der das ammoniakhaltige Reduktionsmittel aufweisende Abgasteilstrom (6", 20) dem Haupt-Abgasstrom (6') stromab einer Motorstau- oder Motorbremsklappe (7), die der Anhebung des Schleppmoments im Bremsbetrieb dient, zurückgeführt wird, wobei bevorzugt vorgesehen ist, dass die Motorstau- oder Motorbremsklappe (7) als Absperr- und/oder Drosseleinrichtung verwendet wird.

10. Verfahren nach Anspruch 8 oder 9, **dadurch gekennzeichnet, dass** eine Motorstau- oder Motorbremsklappe (7'), vorzugsweise eine als Absperr- und/oder Drosseleinrichtung verwendete Motorstau- oder Motorbremsklappe (7'), stromauf einer Abgasturbine (3) angeordnet ist und der Abgasteilstrom (6") wenigstens zum Teil stromauf dieser Motorstau- oder Motorbremsklappe (7') entnommen wird, und/oder dass eine Motorstau- und/oder Motorbremsklappe (7') stromauf einer Abgasturbine (3) angeordnet ist, wobei ein parallel zu dieser Motorstau- und/oder Motorbremsklappe (7') angeordneter Schusskanal vorgesehen ist, über den Abgas (26), insbesondere bei Aktivierung der Motorstau- und/oder Motorbremsklappe (7'), mit definierten Druck und/oder Geschwindigkeit auf das Laufrad einer Abgasturbine (3) geleitet wird.

11. Vorrichtung zur Reinigung eines Abgasstroms einer Brennkraftmaschine, insbesondere einer abgasaufgeladenen Brennkraftmaschine, zur Durchführung eines Verfahrens nach einem der vorhergehenden Verfahrensansprüche, mit einer einen Abgasstrom führenden ersten Abgasleitung und wenigstens einer einen Abgasteilstrom führenden weiteren Abgasleitung, die im Bereich stromauf wenigstens eines SCR-Katalysators zusammengeführt sind, und mit wenigstens einer Zumesseinrichtung, mittels der dem Abgasteilstrom eine Reduktionsmittelvorläufersubstanz (11) zumessbar ist,
wobei in der wenigstens einen weiteren Abgasleitung wenigstens ein Reaktor (9) angeordnet ist, in dem die Reduktionsmittelvorläufersubstanz (11) in definierten Brennkraftmaschinen-Betriebszuständen zum Reduktionsmittel umsetzbar ist,
wobei in der weiteren Abgasleitung wenigstens eine mittels einer Steuer- und/oder Regelvorrichtung (15) gekoppelte Absperr- und/oder Drosseleinrichtung (8, 21) vorgesehen ist, und
wobei sowohl in der ersten Abgasleitung als auch in der weiteren Abgasleitung jeweils wenigstens eine mittels einer Steuer- und/oder Regelvorrichtung (15) gekoppelte Absperr- und/oder Drosseleinrichtung (7, 7'; 8, 21) vorgesehen ist,
**dadurch gekennzeichnet,**
**dass** die Absperr- und/oder Drosseleinrichtung (7, 7'; 8, 21) so ausgebildet und dergestalt in Abhängigkeit von definierten Reaktionsparametern ansteuerbar sind, dass zum einen der Haupt-Abgasstrom (6') mittels der in diesem angeordneten Absperr- und/oder Drosseleinrichtung (7, 7') absperrbar oder definiert drosselbar sind und zum anderen der Abgasteilstrom (6", 20) mittels der in diesem angeordneten Absperr- und/oder Drosseleinrichtung (8, 21) in definiertem Maße aufstaubar ist.

12. Vorrichtung nach Anspruch 11, **dadurch gekennzeichnet, dass** die wenigstens eine weitere, insbesondere zweite Abgasleitung stromauf wenigstens einer in der ersten Abgasleitung angeordneten Absperr- und/oder Drosseleinrichtung (7, 7') von der ersten Abgasleitung abgezweigt ist und/oder dass in der wenigstens einen weiteren Abgasleitung stromab der Zuführung (10) der Reduktionsmittelvorläufersubstanz (11) oder, insbesondere im Falle eines reaktorseitigen Katalysators oder einer reaktorseitigen Katalysatorbeschichtung, der oder die die Zersetzung der Reduktionsmittelvorläufersubstanz (11) begünstigt, stromab des Reaktors (9) und stromauf der Zuführung (13) des Abgasteilstroms (6", 20) zum Haupt-Abgasstrom (6') ein SCR-Katalysator (14) angeordnet ist.

13. Vorrichtung nach Anspruch 11 oder 12, **dadurch gekennzeichnet, dass** die Brennkraftmaschine (1) als abgasaufgeladene Brennkraftmaschine mit wenigstens einer im Abgasstrom angeordneten Abgasturbine (2, 2') ausgebildet ist, wobei bevorzugt vorgesehen ist, dass die wenigstens eine weitere, den Abgasteilstrom (6", 20) führende Abgasleitung im Falle einer einzigen Abgasturbine (3) stromauf und/oder stromab, bevorzugt stromauf, der Abgasturbine (3) und im Falle mehrerer Abgasturbinen (3, 3') stromauf und/oder stromab einer der Abgasturbinen (3, 3'), bevorzugt stromauf einer in Strömungsrichtung gesehen ersten Abgasturbine (3) und/oder zwischen zwei benachbarten Abgasturbinen (3, 3'), abgezweigt ist, und/oder dass die wenigstens eine weitere, den Abgasteilstrom (6", 20) führende Abgasleitung von einer Waste-Gate-Anordnung (23) wenigstens einer Abgasturbine (3) abgezweigt ist.

14. Vorrichtung nach einem der Ansprüche 11 bis 13, **dadurch gekennzeichnet, dass** die wenigstens eine weitere Abgasleitung (6") stromab einer in der ersten Abgasleitung (6') angeordneten Motorbremsklappe (7) in die erste Abgasleitung einmündet, wobei bevorzugt vorgesehen ist, dass die Motorbremsklappe (7) eine Absperr- und/oder Drosseleinrichtung ausbildet.

15. Vorrichtung nach Anspruch 13 oder 14, **dadurch gekennzeichnet, dass** eine vorzugsweise als Absperr- und/oder Drosseleinrichtung ausgebildete Motorbremsklappe (7') stromauf einer Abgasturbine (3) angeordnet ist und die wenigstens eine weitere Abgasleitung (6") stromauf dieser Motorbremsklappe (7') abzweigt, und/oder dass eine Motorstau- und/oder Motorbremsklappe (7') stromauf einer Abgasturbine (3) angeordnet ist, wobei ein parallel zu dieser Motorstau- und/oder Motorbremsklappe (7') angeordneter Schusskanal vorgesehen ist, über den Abgas (26) auf das Laufrad einer Abgasturbine (3) leitbar ist.

## Claims

1. Method for the purification of an exhaust-gas flow of an internal combustion engine, in particular of an exhaust gas-turbocharged internal combustion engine, in which method nitrogen oxides are removed from the exhaust-gas flow by means of selective catalytic reduction (SCR), wherein the exhaust-gas flow (6) is split or branched, upstream of at least one SCR catalytic converter (12), into a main exhaust-gas flow (6') and a partial exhaust-gas flow (6", 20), said partial exhaust-gas flow (6", 20) having a defined quantity of a reducing agent precursor substance (11) for decomposition fed to it in defined internal combustion engine operating states, which reducing agent precursor substance is converted, in a reactor (9) of the partial exhaust-gas flow (6", 20), to form a reducing agent which is discharged from the reactor (9) by means of the partial exhaust-gas flow (6", 20) and which is fed to the main exhaust-gas flow (6') upstream of the SCR catalytic converter (12),
wherein, in the partial exhaust-gas flow (6", 20), there is provided at least one shut-off and/or throttle device (8, 21) which is coupled to a control and/or regulating device and which can be actuated in a manner dependent on defined operating parameters, and
wherein also, in the main exhaust-gas flow (6', 20), there is arranged at least one shut-off and/or throttle device (7, 7') which is coupled to a control and/or regulating device,
**characterized**
**in that** the shut-off and/or throttle devices (7, 7', 8, 21) arranged in the partial exhaust-gas flow (6", 20) and in the main exhaust-gas flow (6', 20) are actuated in a manner dependent on defined reaction parameters such that, on the one hand, the main exhaust-gas flow (6') is shut off or throttled to a defined extent by means of the shut-off and/or throttle device (7, 7') arranged therein, and on the other hand, the partial exhaust-gas flow (6", 20) is backed up to a defined extent by means of the shut-off and/or throttle device (8, 21) arranged therein.

2. Method according to Claim 1, **characterized in that**, in particular during idle and/or low-load operation of the internal combustion engine (1), the at least one shut-off and/or throttle device (7, 7') arranged in the main exhaust-gas flow (6') is shut off or throttled to a defined extent in order to set the exhaust-gas mass or quantity conducted via the reactor (9), while the setpoint exhaust-gas pressure and/or the setpoint air/fuel ratio and/or the setpoint exhaust-gas temperature is predefined, in particular adjusted to, at least in a manner dependent on defined reaction parameters in the reactor (9), by means of the at least one shut-off and/or throttle device arranged in the partial exhaust-gas flow (6", 20).

3. Method according to Claim 1 or Claim 2, **characterized in that**, during idle and/or low-load operation of the internal combustion engine (1), the main exhaust-gas flow (6') is throttled to such an extent that the air/fuel ratio is lowered by at least 0.2, but not to below 1.02, and/or the main exhaust-gas flow (6') is throttled to such an extent that the exhaust-gas temperature is raised by at least 30°C, and/or the exhaust-gas flow or main exhaust-gas flow (6') is throttled to such an extent that the exhaust-gas back pressure at the outlet from the cylinders is raised by 0.01 MPa to 0.5 MPa and/or that the relative exhaust-gas back pressure at the outlet from the cylinders is raised by 30% to 5000%.

4. Method according to one of the preceding claims, **characterized in that**, in unthrottled operation of the internal combustion engine (1), at most 30% of the exhaust-gas mass and, in definedly throttled operation of the internal combustion engine (1), at least 30% of the exhaust-gas mass of the internal combustion engine (1), is conducted via the partial exhaust-gas flow (6", 20).

5. Method according to one of the preceding claims, **characterized in that** the reactor (9) has a catalyst or a catalyst coating which promotes the decomposition of the reducing agent precursor substance (11), in particular of an ammonia precursor substance, wherein it is preferably provided that the catalyst or the catalyst coating that promotes the decomposition of the reducing agent precursor substance (11), in particular of an ammonia precursor substance, simultaneously exhibits NOx reduction activity.

6. Method according to one of the preceding claims, **characterized in that** an SCR catalytic converter (12) is arranged in the partial exhaust-gas flow (6", 20) downstream of the feed of the reducing agent precursor substance (11), or in particular in the case of a catalyst or a catalyst coating according to Claim 5, downstream of the reactor (9) and upstream of the feed of the partial exhaust-gas flow (6", 20) to the main exhaust-gas flow (6').

7. Method according to one of the preceding claims, **characterized in that** heat is supplied to the reactor (9) at defined times by means of a heating device, in particular by means of an electric heating device.

8. Method according to one of the preceding claims, **characterized in that** the internal combustion engine (1) is in the form of an exhaust gas-turbocharged internal combustion engine (1) with at least one exhaust-gas turbine (3, 3') arranged in the exhaust-gas flow, wherein it is preferably provided that, in the case of a single exhaust-gas turbine (3), the partial exhaust-gas flow (6") is branched off upstream and/or downstream, preferably upstream, of the exhaust-gas turbine (3), and in the case of multiple exhaust-gas turbines (3, 3'), the partial exhaust-gas flow (6") is branched off upstream and/or downstream of one of the exhaust-gas turbines (3, 3'), preferably upstream of a first exhaust-gas turbine (3) as viewed in the flow direction and/or between two adjacent exhaust-gas turbines (3, 3'), and/or in that the partial exhaust-gas flow (6") is branched off from a wastegate arrangement (23) of at least one exhaust-gas turbine (3).

9. Method according to one of the preceding claims, **characterized in that** the partial exhaust-gas flow (6", 20) which has the ammonia-containing reducing agent is recirculated to the main exhaust-gas flow (6') downstream of an engine brake valve or flap (7) which serves for increasing the drag torque during braking operation, wherein it is preferably provided that the engine brake valve or flap (7) is used as shut-off and/or throttle device.

10. Method according to Claim 8 or 9, **characterized in that** an engine brake valve or flap (7'), preferably an engine brake valve or flap (7') which is used as shut-off and/or throttle device, is arranged upstream of an exhaust-gas turbine (3), and the partial exhaust-gas flow (6") is at least partially extracted upstream of said engine brake valve or flap (7'), and/or **in that** an engine brake valve and/or flap (7') is arranged upstream of an exhaust-gas turbine (3), wherein a shot channel is provided which is arranged parallel to said engine brake valve and/or flap (7') and via which exhaust gas (26) is, in particular upon activation of the engine brake valve and/or flap (7'), conducted at a defined pressure and/or speed onto the impeller of an exhaust-gas turbine (3).

11. Device for the purification of an exhaust-gas flow of an internal combustion engine, in particular of an exhaust gas-turbocharged internal combustion engine, for carrying out a method according to one of the preceding method claims, having a first exhaust line which conducts an exhaust-gas flow and having at least one further exhaust line which conducts a partial exhaust-gas flow, which exhaust lines are merged in the region upstream of at least one SCR catalytic converter, and having at least one metering device by means of which a reducing agent precursor substance (11) can be metered to the partial exhaust-gas flow,
wherein, in the at least one further exhaust line, there is arranged at least one reactor (9) in which, in defined internal combustion engine operating states, the reducing agent precursor substance (11) can be converted into reducing agent,
wherein, in the further exhaust line, there is provided at least one shut-off and/or throttle device (8, 21) which is coupled to a control and/or regulating device (15), and
wherein, both in the first exhaust line and in the further exhaust line, there is provided in each case at least one shut-off and/or throttle device (7, 7'; 8, 21) which is coupled to a control and/or regulating device (15),
**characterized**
**in that** the shut-off and/or throttle device (7, 7'; 8, 21) is designed, and can be actuated in a manner dependent on defined reaction parameters, such that, on the one hand, the main exhaust-gas flow (6') can be shut off or throttled to a defined extent by means of the shut-off and/or throttle device (7, 7') arranged therein, and on the other hand, the partial exhaust-gas flow (6", 20) can be backed up to a defined extent by means of the shut-off and/or throttle device (8, 21) arranged therein.

12. Device according to Claim 11, **characterized in that** the at least one further, in particular second exhaust line is branched off from the first exhaust line upstream of at least one shut-off and/or throttle device (7, 7') arranged in the first exhaust line, and/or **in that** an SCR catalytic converter (14) is arranged in the at least one further exhaust line downstream of the feed (10) of the reducing agent precursor substance (11) or, in particular in the case of there being provided on the reactor a catalyst or a catalyst coating which promotes the decomposition of the reducing agent precursor substance (11), downstream of the reactor (9) and upstream of the feed (13) of the partial exhaust-gas flow (6", 20) to the main exhaust-gas flow (6').

13. Device according to Claim 11 or 12, **characterized in that** the internal combustion engine (1) is in the form of an exhaust gas-turbocharged internal combustion engine with at least one exhaust-gas turbine (3, 3') arranged in the exhaust-gas flow, wherein it is preferably provided that, in the case of a single exhaust-gas turbine (3), the at least one further exhaust line which conducts the partial exhaust-gas flow (6", 20) is branched off upstream and/or downstream, preferably upstream, of the exhaust-gas turbine (3), and in the case of multiple exhaust-gas turbines (3, 3'), the partial exhaust-gas flow (6", 20) is branched off upstream and/or downstream of one of the exhaust-gas turbines (3, 3'), preferably upstream of a first exhaust-gas turbine (3) as viewed in the flow direction and/or between two adjacent exhaust-gas turbines (3, 3'), and/or **in that** the at least one further exhaust line which conducts the partial exhaust-gas flow (6", 20) is branched off from a wastegate arrangement (23) of at least one exhaust-gas turbine (3).

14. Device according to one of Claims 11 to 13, **characterized in that** the at least one further exhaust line (6") issues into the first exhaust line downstream of an engine brake flap (7) arranged in the first exhaust line (6'), wherein it is preferably provided that the engine brake flap (7) forms a shut-off and/or throttle device.

15. Device according to Claim 13 or 14, **characterized in that** an engine brake flap (7') which is preferably designed as shut-off and/or throttle device is arranged upstream of an exhaust-gas turbine (3) and the at least one further exhaust line (6") branches off upstream of said engine brake flap (7'), and/or **in that** an engine brake valve and/or flap (7') is arranged upstream of an exhaust-gas turbine (3), wherein a shot channel is provided which is arranged parallel to said engine brake valve and/or flap (7') and via which exhaust gas (26) can be conducted onto the impeller of an exhaust-gas turbine (3).

## Revendications

1. Procédé d'épuration d'un flux de gaz d'échappement d'un moteur à combustion interne, en particulier d'un moteur à combustion interne à suralimentation à gaz d'échappement, dans lequel les oxydes d'azote sont éliminés du flux de gaz d'échappement au moyen d'une réduction catalytique sélective (RCS), le flux de gaz d'échappement (6) étant divisé ou ramifié en amont d'au moins un catalyseur RCS (12) en un flux de gaz d'échappement principal (6') et un flux partiel de gaz d'échappement (6", 20), une quantité définie d'une substance précurseur d'agent réducteur (11) à décomposer étant acheminée à ce flux partiel de gaz d'échappement (6", 20) dans des états de fonctionnement définis du moteur à combustion interne, laquelle est convertie dans un réacteur (9) du flux partiel de gaz d'échappement (6", 20) en un agent réducteur, qui est évacué du réacteur (9) au moyen du flux partiel de gaz d'échappement (6", 20) et qui est acheminé au flux de gaz d'échappement principal (6') en amont du catalyseur RCS (12),
au moins un dispositif de blocage et/ou d'étranglement (8, 21) accouplé à un dispositif de commande et/ou de régulation et pouvant être commandé en fonction de paramètres de fonctionnement définis étant prévu dans le flux partiel de gaz d'échappement (6", 20), et
au moins un dispositif de blocage et/ou d'étranglement (7, 7') accouplé à un dispositif de commande et/ou de régulation étant également disposé dans le flux de gaz d'échappement principal (6', 20),
**caractérisé en ce que**
les dispositifs de blocage et/ou d'étranglement (7, 7', 8, 21) disposés dans le flux partiel de gaz d'échappement (6", 20) et dans le flux de gaz d'échappement principal (6', 20) sont commandés en fonction de paramètres de réaction définis de telle sorte que d'une part le flux de gaz d'échappement principal (6') soit bloqué ou étranglé de manière définie au moyen du dispositif de blocage et/ou d'étranglement (7, 7') disposé dans celui-ci et que d'autre part le flux partiel de gaz d'échappement (6", 20) soit refoulé dans une mesure définie au moyen du dispositif de blocage et/ou d'étranglement (8, 21) disposé dans celui-ci.

2. Procédé selon la revendication 1, **caractérisé en ce qu'**en particulier en fonctionnement de marche à vide et/ou à faible charge du moteur à combustion interne (1), l'au moins un dispositif de blocage et/ou d'étranglement (7, 7') disposé dans le flux de gaz d'échappement principal (6') est bloqué ou étranglé de manière définie pour fixer la masse ou la quantité de gaz d'échappement guidée par le biais du réacteur (9), tandis que la pression de gaz d'échappement de consigne et/ou le rapport air-carburant de consigne et/ou la température de gaz d'échappement de consigne sont prédéfinis, en particulier ajustés par réglage dans le réacteur (9), au moyen de l'au moins un dispositif de blocage et/ou d'étranglement disposé dans le flux partiel de gaz d'échappement (6", 20) au moins en fonction de paramètres de réaction définis.

3. Procédé selon la revendication 1 ou la revendication 2, **caractérisé en ce qu'**en fonctionnement de marche à vide et/ou à faible charge du moteur à combustion interne (1), le flux de gaz d'échappement principal (6') est étranglé dans une mesure telle que le rapport air-carburant soit abaissé d'au moins 0,2, mais pas en dessous de 1,02, et/ou le flux de gaz échappement principal (6') est étranglé dans une mesure telle que la température de gaz d'échappement soit augmentée d'au moins 30°C et/ou le flux de gaz d'échappement ou le flux de gaz d'échappement principal (6') est étranglé dans une mesure telle que la contre-pression de gaz d'échappement à la sortie des cylindres soit augmentée de 0,01 MPa à 0,5 MPa et/ou **en ce que** la contre-pression de gaz d'échappement relative à la sortie des cylindres est augmentée de 30 % à 5000 %.

4. Procédé selon l'une quelconque des revendications précédentes, **caractérisé en ce qu'**en fonctionnement non étranglé du moteur à combustion interne (1), au maximum 30 % de la masse de gaz d'échappement et, en fonctionnement étranglé de manière définie du moteur à combustion interne (1), au moins 30 % de la masse de gaz d'échappement du moteur à combustion interne (1) sont guidés par le biais du flux partiel de gaz d'échappement (6", 20).

5. Procédé selon l'une quelconque des revendications précédentes, **caractérisé en ce que** le réacteur (9) présente un catalyseur ou un revêtement catalyseur qui favorise la décomposition de la substance précurseur d'agent réducteur (11), en particulier d'une substance précurseur d'ammoniac, et il est prévu de préférence que le catalyseur ou le revêtement catalyseur qui favorise la décomposition de la substance précurseur d'agent réducteur (11), en particulier d'une substance précurseur d'ammoniac, présente en même temps une activité réduisant les NOx.

6. Procédé selon l'une quelconque des revendications précédentes, **caractérisé en ce que** dans le flux partiel de gaz d'échappement (6", 20) en aval de l'alimentation en substance précurseur d'agent réducteur (11) ou notamment dans le cas d'un catalyseur ou d'un revêtement catalyseur selon la revendication 5, en aval du réacteur (9) et en amont de l'alimentation du flux partiel de gaz d'échappement (6", 20) au flux de gaz d'échappement principal (6'), est disposé un catalyseur RCS (12).

7. Procédé selon l'une quelconque des revendications précédentes, **caractérisé en ce que** l'on achemine de la chaleur à des instants définis au réacteur (9) au moyen d'un dispositif de chauffage, en particulier au moyen d'un dispositif de chauffage électrique.

8. Procédé selon l'une quelconque des revendications précédentes, **caractérisé en ce que** le moteur à combustion interne (1) est réalisé sous forme de moteur à combustion interne à suralimentation à gaz d'échappement (1) avec au moins une turbine à gaz d'échappement (3, 3') disposée dans le flux de gaz d'échappement, et il est prévu de préférence que le flux partiel de gaz d'échappement (6"), soit ramifié, dans le cas d'une turbine à gaz d'échappement unique (3), en amont et/ou en aval, de préférence en amont, de la turbine à gaz d'échappement (3) et dans le cas de plusieurs turbines à gaz d'échappement (3, 3') en amont et/ou en aval de l'une des turbines à gaz d'échappement (3, 3'), de préférence en amont d'une première turbine à gaz d'échappement (3), vue dans le sens de l'écoulement, et/ou entre deux turbines à gaz d'échappement adjacentes (3, 3'), et/ou **en ce que** le courant partiel de gaz d'échappement (6") est ramifié par un agencement de soupape de décharge (23) d'au moins une turbine à gaz d'échappement (3).

9. Procédé selon l'une quelconque des revendications précédentes, **caractérisé en ce que** le flux partiel de gaz d'échappement (6", 20) présentant l'agent réducteur contenant de l'ammoniac est ramené au flux de gaz d'échappement principal (6') en aval d'un clapet de pression ou de freinage du moteur (7) qui sert à augmenter le couple d'entraînement en mode de freinage, et de préférence il est prévu que le clapet de pression ou de freinage du moteur (7) soit utilisé en tant que dispositif de blocage et/ou d'étranglement.

10. Procédé selon la revendication 8 ou 9, **caractérisé en ce qu'**un clapet de pression ou de freinage du moteur (7'), de préférence un clapet de pression ou de freinage du moteur (7') utilisé en tant que dispositif de blocage et/ou d'étranglement, est disposé en amont d'une turbine à gaz d'échappement (3) et le courant partiel de gaz d'échappement (6") est prélevé au moins en partie en amont de ce clapet de pression ou de freinage du moteur (7'), et/ou **en ce qu'**un clapet de pression et/ou de freinage du moteur (7') est disposé en amont d'une turbine à gaz d'échappement (3), un canal de tir disposé parallèlement à ce clapet de pression et/ou de freinage du moteur (7') étant prévu, par le biais duquel du gaz échappement (26), en particulier lors de l'activation du clapet de pression et/ou de freinage du moteur (7'), est guidé avec une pression définie et/ou une vitesse définie vers la roue mobile d'une turbine à gaz d'échappement (3).

11. Dispositif d'épuration d'un flux de gaz d'échappement d'un moteur à combustion interne, en particulier d'un moteur à combustion interne à suralimentation à gaz d'échappement pour mettre en oeuvre un procédé selon l'une quelconque des revendications de procédé précédentes, comprenant une première conduite de gaz d'échappement conduisant un flux de gaz d'échappement et au moins une conduite de gaz d'échappement supplémentaire conduisant un flux partiel de gaz d'échappement, lesquelles sont réunies dans la zone en amont d'au moins un catalyseur RCS, et comprenant au moins un dispositif de dosage au moyen duquel la substance précurseur d'agent réducteur (11) peut être ajoutée par dosage au flux partiel de gaz d'échappement,
au moins un réacteur (9) étant disposé dans l'au moins une conduite de gaz d'échappement, dans lequel la substance précurseur d'agent réducteur (11) peut être mise en réaction dans des états de fonctionnement définis du moteur à combustion interne pour fournir de l'agent de réduction,
au moins un dispositif de blocage et/ou d'étranglement (8, 21) accouplé à un dispositif de commande et/ou de régulation (15) étant prévu dans la conduite de gaz échappement supplémentaire, et
à chaque fois au moins un dispositif de blocage et/ou d'étranglement (7, 7' ; 8, 21) accouplé à un dispositif de commande et/ou de régulation (15) étant prévu à la fois dans la première conduite de gaz d'échappement et dans la conduite de gaz d'échappement supplémentaire,
**caractérisé en ce que**
le dispositif de blocage et/ou d'étranglement (7, 7' ; 8, 21) est réalisé et commandable en fonction de paramètres de réaction définis de telle sorte que d'une part le flux de gaz d'échappement principal (6') puisse être bloqué ou étranglé de manière définie au moyen du dispositif de blocage et/ou d'étranglement (7, 7') disposé dans celui-ci et que d'autre part le flux partiel de gaz d'échappement (6", 20) puisse être refoulé dans une mesure définie au moyen du dispositif de blocage et/ou d'étranglement (8, 21) disposé dans celui-ci.

12. Dispositif selon la revendication 11, **caractérisé en ce que** l'au moins une conduite de gaz échappement supplémentaire, en particulier la deuxième conduite de gaz d'échappement, est ramifiée en amont d'au moins un dispositif de blocage et/ou d'étranglement (7, 7') disposé dans la première conduite de gaz d'échappement depuis la première conduite de gaz d'échappement et/ou **en ce qu'**un catalyseur RCS (14) est disposé dans l'au moins une conduite de gaz d'échappement supplémentaire en aval de l'alimentation (10) en substance précurseur d'agent réducteur (11) ou, en particulier dans le cas d'un catalyseur du côté du réacteur ou d'un revêtement catalyseur du côté du réacteur, qui favorise la décomposition de la substance précurseur d'agent réducteur (11), en aval du réacteur (9) et en amont de l'alimentation (13) en flux partiel de gaz d'échappement (6" , 20) au flux de gaz d'échappement principal (6').

13. Dispositif selon la revendication 11 ou 12, **caractérisé en ce que** le moteur à combustion interne (1) est réalisé sous forme de moteur à combustion interne à suralimentation à gaz d'échappement avec au moins une turbine à gaz d'échappement (3, 3') disposée dans le flux de gaz échappement, et il est prévu de préférence que l'au moins une conduite de gaz échappement supplémentaire, guidant le flux partiel de gaz d'échappement (6", 20) soit ramifiée, dans le cas d'une turbine à gaz d'échappement unique (3) en amont et/ou en aval, de préférence en amont de la turbine à gaz d'échappement (3) et dans le cas de plusieurs turbines à gaz d'échappement (3, 3'), en amont et/ou en aval de l'une des turbines à gaz d'échappement (3, 3'), de préférence en amont d'une première turbine à gaz d'échappement (3) vue dans la direction de l'écoulement, et/ou entre deux turbines à gaz d'échappement adjacentes (3, 3'), et/ou **en ce que** l'au moins une conduite de gaz d'échappement supplémentaire conduisant le flux partiel de gaz d'échappement (6", 20) est ramifiée par un agencement de soupape de décharge (23) d'au moins une turbine à gaz d'échappement (3).

14. Dispositif selon l'une quelconque des revendications 11 à 13, **caractérisé en ce que** l'au moins une conduite de gaz d'échappement supplémentaire (6") débouche dans la première conduite de gaz d'échappement en aval d'un clapet de freinage du moteur (7) disposé dans la première conduite de gaz d'échappement (6'), et il est prévu de préférence que le clapet de freinage du moteur (7) constitue un dispositif de blocage et/ou d'étranglement.

15. Dispositif selon la revendication 13 ou 14, **caractérisé en ce qu'**un clapet de freinage du moteur (7') réalisé de préférence sous forme de dispositif de blocage et/ou d'étranglement est disposé en amont d'une turbine à gaz d'échappement (3) et l'au moins une conduite de gaz d'échappement supplémentaire (6") se ramifie en amont de ce clapet de freinage du moteur (7'), et/ou **en ce qu'**un clapet de pression ou de freinage du moteur (7') est disposé en amont d'une turbine à gaz d'échappement (3), un canal de tir disposé parallèlement à ce clapet de pression ou de freinage du moteur (7') étant prévu, par le biais duquel du gaz d'échappement (26) peut être guidé vers la roue mobile d'une turbine à gaz d'échappement (3).
